(19) **Europäisches Patentamt**

**European Patent Office**

**Office européen des brevets**

(11) **EP 1 271 093 A2**

(12) **EUROPÄISCHE PATENTANMELDUNG**

(43) Veröffentlichungstag:
02.01.2003  Patentblatt 2003/01

(51) Int Cl.$^7$: **G01B 7/30**

(21) Anmeldenummer: 02100744.8

(22) Anmeldetag: 25.06.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.06.2001  DE 10130988**

(71) Anmelder:
• **Philips Corporate Intellectual Property GmbH 20099 Hamburg (DE)**
Benannte Vertragsstaaten:
**DE**
• **Koninklijke Philips Electronics N.V. 5621 BA Eindhoven (NL)**
Benannte Vertragsstaaten:
**AT BE CH LI CY DK ES FI FR GB GR IE IT LU MC NL PT SE TR**

(72) Erfinder: **Waffenschmidt, Eberhard, Dr. 52066, Aachen (DE)**

(74) Vertreter: **Volmer, Georg, Dipl.-Ing. et al Philips Corporate Intellectual Property GmbH, Postfach 50 04 42 52088 Aachen (DE)**

(54) **Justierung eines magnetoresistiven Winkelsensors**

(57)    Niederdruckgasentladungslampe ausgerüstet mit einem Gasentladungsgefäß mit einer Gasfüllung, die Quecksilber enthält, mit Elektroden, mit Mitteln zur Zündung und Aufrechterhaltung einer Gasentladung und mit einer Leuchtstoffbeschichtung, die mindestens eine Leuchtstoffschicht umfasst und einen im UV-C-Leuchtstoff und einen durch UV-C-Strahlung anregbaren Leuchtstoff enthält.

FIG. 1

EP 1 271 093 A2

**Beschreibung**

Die vorliegende Erfindung bezieht sich auf einen Winkelsensor und ein Verfahren zur Justierung eines Winkelsensors.

Die Verwendung von magnetoresistiven Winkelsensoren (MR-Sensoren) gehört heute zum Stand der Technik. Sie dienen der Bestimmung von Positionen bei Vorrichtungen, welche Drehbewegungen ausführen, z.B. wie weit ein Ventil geöffnet ist. Die Wirkungsweise basiert auf Magnetfeldänderungen, d.h. das Magnetfeld um den Sensor verändert sich bzw. der Sensor wird in einem vorhandenen Magnetfeld z.B. dem Erdmagnetfeld bewegt. In diesem Fall funktioniert ein magnetoresistiver Winkelsensor als Kompass. Die Wirkungsweise eines solchen magnetoresistiven Winkelsensors beruht auf elektrischen Bauelementen, welche ihren elektrischen Widerstand in Abhängigkeit des anliegenden Magnetfelds verändern. Eingebaut werden diese Bauelemente meist in eine Brückenschaltung (Wheatstonesche Brücke), von denen ein MR-Sensor zwei enthält. Die über solchen Brückenschaltungen abfallenden Spannungen dienen als Messgrößen für den zu messenden Winkel. Da die Bauteile bei der Produktion allerdings Schwankungen unterworfen sind, kann auch im Ruhezustand, d.h. bei einem Winkel von 0° eine Spannung über den Brückenschaltungen abfallen. Diese sogenannte Offsetspannung muss aber vor der Inbetriebnahme des Winkelsensors kompensiert werden, da sonst die angezeigten Winkelmesswerte mit einem Fehler behaftet sind.

Eine Möglichkeit, eine solche Kompensation vorzunehmen, ist aus US 6,173,501 bekannt. Hier sind die magnetoresistiven Bauteile von stromdurchflossenen Spulen umgeben, welche ein eventuell auftretendes zusätzliches Magnetfeld kompensieren. Vor der Winkelmessung wird eine zusätzliche Messung durchgeführt. Treten hierbei Spannungen an den Brückenschaltungen mit den magnetoresistiven Bauteilen auf, so wird durch die Spulen ein Strom geschickt, welcher ein Magnetfeld in den Spulen erzeugt, welches das anliegende äußere zusätzliche Magnetfeld kompensiert. Damit gehen die Spannungen an den Brückenschaltungen auf Null zurück und die eigentliche Winkelmessung kann beginnen. Dieses Verfahren hat jedoch den Nachteil, dass zur Kompensation von äußeren Magnetfeldern stets die Ströme durch die Kompensationsspulen neu ausgeregelt werden müssen, was nicht beliebig schnell geht und die Bereitstellung entsprechender Kompensationsströme voraussetzt.

Eine weitere Möglichkeit zur Kompensation zeigt DE 198 52 502 A1 auf. Auch hier werden zwei Wheatstonesche Brücken mit magnetoresistiven Bauteilen verwendet. Bei der Kompensation etwaiger Offset-Spannungen wird in einem ersten Schritt eine Wheatstonesche Brücke mit einem Gleichmagnetfeld beaufschlagt. Die Ausgangsspannung der Wheatstoneschen Brücke ist abhängig vom Winkel, unter dem das Gleichmagnetfeld auf die Wheatstonesche Brücke einwirkt. Der Widerstand der einzelnen magnetoresistiven Widerstände der Wheatstoneschen Brücke ist dann am geringsten, wenn das Gleichmagnetfeld senkrecht zu den magnetoresistiven Widerständen verläuft, d.h. senkrecht zu der Längsachse und senkrecht zu der Stromflussrichtung der magnetoresistiven Widerstände. Verläuft das Gleichmagnetfeld senkrecht zu den magnetoresistiven Widerständen des ersten Paares oder senkrecht zu den magnetoresistiven Widerständen des zweiten Paares der Wheatstoneschen Brücke, so ergibt sich für den Betrag der Ausgangsspannung der Wheatstoneschen Brücke ein Maximum. So soll das die Wheatstonesche Brücke in dem ersten Schritt beaufschlagende Gleichmagnetfeld derart gerichtet sein, dass es weder im wesentlichen senkrecht zu den magnetoresistiven Widerständen des ersten Paares noch im wesentlichen senkrecht zu den magnetoresistiven Widerständen des zweiten Paares der Wheatstoneschen Brücke verläuft. Dies bedeutet, dass die Maximalbereiche der Ausgangsspannung der Wheatstoneschen Brücke vermieden werden sollen. Wenn nun das die Wheatstonesche Brücke beaufschlagende Gleichmagnetfeld in dem zweiten Schritt entfernt wird, hängen die Ausgangsspannungen der Wheatstoneschen Brücke davon ab, unter welchem Winkel das Gleichmagnetfeld auf die Wheatstonesche Brücke eingewirkt hat. Diesem Lösungsansatz liegt die Erkenntnis zugrunde, dass die Ausgangsspannung in dem zweiten Schritt, d.h. nach Entfernen des Gleichmagnetfeldes, über relativ große Winkelbereiche des Winkels des in dem ersten Schritt wirkenden Gleichmagnetfeldes nur sehr wenig von der Offset-Spannung der Wheatstoneschen Brücke abweicht. Daher ist es möglich, die Offset-Spannung der Wheatstoneschen Brücke aus der Ausgangsspannung bei entferntem Gleichmagnetfeld zu bestimmen. Lediglich dann, wenn das die Wheatstonesche Brücke in dem ersten Schritt beaufschlagende Gleichmagnetfeld senkrecht zu den magnetoresistiven Widerständen des ersten Paares oder senkrecht zu den magnetoresistiven Widerständen des zweiten Paares verläuft, ergeben sich nach Entfernen des Gleichmagnetfeldes größere Abweichungen der dann gemessenen Ausgangsspannung zu der Offset-Spannung. Dasselbe Verfahren zur Kompensation wird für die zweite Wheatstonesche Brücke durchgeführt.

Die von der Wheatstoneschen Brücke nach Entfernen des Gleichmagnetfeldes gelieferte Ausgangsspannung stellt somit ein Maß für die Offset-Spannung des Wheatstoneschen Brücke dar. Dieses von der Wheatstoneschen Brücke ohne Gleichmagnetfeld gelieferte Ausgangssignal wird daher in dem dritten Schritt mittels der Auswerteschaltung zur Offset-Kalibrierung verwendet.

Beide Lösungen haben aber den Nachteil, dass die Kompensation vor dem eigentlichen Messvorgang des Winkels stattfinden muss. Eine Kompensation von vor der Kompensation gemessenen Winkeln ist nicht möglich

Es ist daher die Aufgabe der vorliegenden Erfindung, eine Justierung eines MR-Sensors zu ermöglichen, welche auch während des Betriebs des Winkelsensors vorgenommen werden kann.

Die Aufgabe wird erfindungsgemäß durch einen Winkelsensor gelöst, der zwei Brückenschaltungen aufweist, an denen während einer Winkelmessung ein Spannungswertepaar abfällt, das zusammen mit mindestens einer Korrekturgröße zur Berechnung eines Winkels verwendet wird, und der eine Auswerteschaltung aufweist, die zur Berechnung der Korrekturgröße aus mehreren der Spannungswertepaaren, deren jeweilige Werte gegeneinander aufgetragen auf einem Kreis- oder einem Ellipsenumfang liegen, mittels einer Mittelpunktsberechnung des Kreises oder der Ellipse ausgestaltet ist.

Damit ist es möglich bereits gemessene Spannungswertepaare und daraus berechnete Winkel nachträglich zu korrigieren, falls eine Offset-Spannung vorgelegen hat. Dies kann bei jeder Winkelmessung geschehen oder in regelmäßigen Intervallen erfolgen. Die Korrekturgröße, welche den Winkelsensor justiert, kann dabei direkt mit den Messwerten der Spannungswertepaare in der Auswerteschaltung verrechnet werden. Somit enthält das Ausgangssignal immer den korrigierten, justierten Winkel. Außerdem findet die Korrektur unmittelbar in der Signalverarbeitung der Auswerteschaltung statt, ohne dass wie beim Stand der Technik zusätzliche Korrektureinrichtungen wie Korrekturspulen vorhanden sein müssen.

Die gemäß Anspruch 2 vorgenommene Justierung bei laufendem Messbetrieb bietet den Vorteil, dass jeder gemessene Winkel korrekt erfasst wird. Dies ist besonders vorteilhaft, wenn absolut präzise Messungen erforderlich sind bzw. sich die äußeren Bedingungen um den Sensor herum z.B. durch wechselnde äußere Magnetfelder oder Temperaturen ständig ändern. Unter solchen Bedingungen kann nur durch eine ständige Justierung des MR-Sensors eine korrekte Winkelerfassung sichergestellt werden.

Die Ausgestaltung gemäß Anspruch 3 bietet den Vorteil, dass die an den beiden Brückenschaltungen eines MR-Sensors abfallenden Spannungswertepaare genau um einen Winkel von 45° phasenversetzt sind. Somit fällt immer der Nulldurchgang der einen Messspannung mit dem Maximum der anderen Messspannung zusammen und ein Spannungswertepaar lässt sich als Punkt auf dem Unfang eines Kreises darstellen, wenn die Spannungswerte gegeneinander aufgetragen werden. Außerdem liefert diese Anordnung eindeutig zuordenbare Spannungswertepaare für Winkel im Bereich von 0° bis 180°.

Mit der Verwendung eines Mikroprozessors in der Auswerteschaltung gemäß Anspruch 4 lässt sich das Verfahren zur Justierung des Winkelsensors mittels eines Programms, welches die Kreisberechnung durchführt, verwirklichen. Dies erhöht die Flexibilität bei etwaigen Verbesserungswünschen. Außerdem kann der Mikroprozessor die ermittelten Korrekturgrößen direkt mit den Spannungswertepaaren verrechnen und so eine laufende Justierung des Winkelsensors sicherstellen, so dass der ausgegebene Winkel stets korrekt ist.

Gemäß Anspruch 5 bietet der vorliegende Winkelsensor den Vorteil, dass ihm für eine korrekte Justierung gemessene Werte in einem kleinen Winkelbereich ausreichen, um eine hinreichend genaue Justierung durchzuführen. Dies ist wichtig, da die Justierung während des Betriebs möglich sein soll. Der Winkelsensor muss also sich bei jedem gemessenen Winkel so genau wie möglich justieren können. Je kleiner der gemessene Winkel ist, desto ungenauer ist die Justierung. Insofern ist es ein großer Vorteil, dass der erfindungsgemäße Winkelsensor mit einem Winkel von 10° auskommt.

Die Ausführung nach Anspruch 6 bietet eine hinreichend genaue Berechnung der Korrekturgrößen und erfordert nur einen verhältnismäßig geringen Rechenaufwand. Man erhält so einen optimalen Kompromiss zwischen Genauigkeit und Rechenaufwand bzw. dazu erforderlicher Hardware.

Ausführungsbeispiele der vorliegenden Erfindung werden nachfolgend an Hand mehrerer Figuren näher beschrieben und erläutert. Es zeigen:

Figur 1     eine Doppelbrückenschaltung aus zwei um 45° gegeneinander verdreht angeordneten Wheatstoneschen Brücken,

Figur 2     die Spannungsverläufe der Brückenspannungen $U_1, U_2$ über einen mechanischen Winkelbereich von 180°,

Figur 3     den erfindungsgemäßen Fitalgorithmus als Lab View-Diagramm und

Figur 4     das Ergebnis eines mit dem Fitalgorithmus berechneten Kreises und der sich daraus ergebenden Offsetspannung $\underline{U}_{off}$.

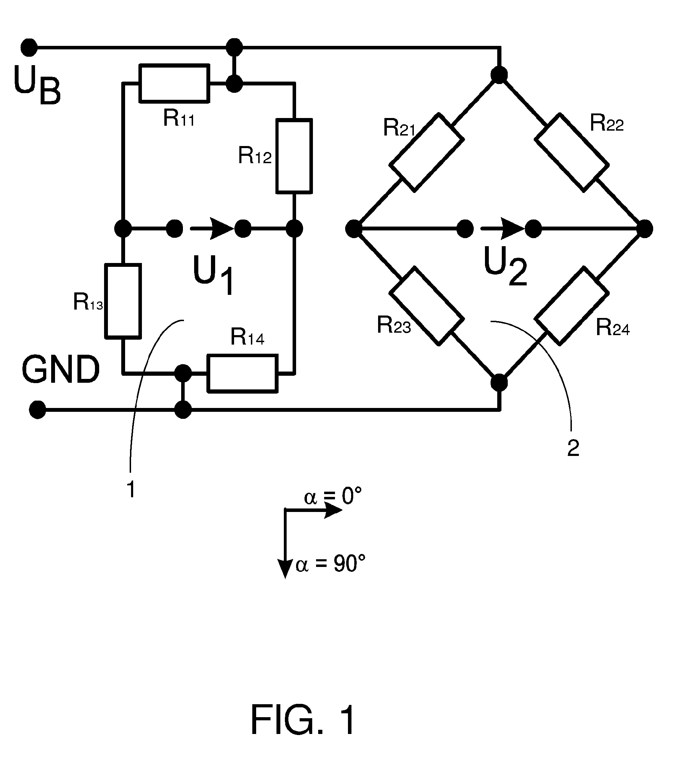

Ein in Figur 1 gezeigter magnetoresistiver Winkelsensor (MR-Sensor) besteht aus zwei sogenannten Wheatstoneschen Brückenschaltungen 1, 2. Eine Wheatstonesche Brückenschaltung in Verbindung mit magnetoresistiven Sensoren ist auch aus DE 34 42 278 bekannt. Beide Wheatstoneschen Brücken werden von einer gemeinsamen Gleichspannungsquelle gespeist. Die magnetisch beeinflussbaren Widerstände der beiden Brücken $R_{11}, R_{12}, R_{13}, R_{14}$ und $R_{21}, R_{22}, R_{23}, R_{24}$ verändern dabei ihren elektrischen Widerstand in Abhängigkeit des sie umgebenden Magnetfelds. Über jeder der beiden Brücken 1, 2 fällt eine Brükkenspannung $U_1, U_2$ ab. Die Spannungen $U_1, U_2$ sind gleichzeitig die beiden Ausgangssignale des MR-Sensors und werden zur Winkelberechnung benötigt, welches in einer hier nicht gezeigten Auswerteschaltung des MR-Sensors geschieht. Die eine Brücke 2 ist außerdem gegenüber der anderen Brücke um 45° verdreht angeordnet. Wird der MR-Sensor bestehend aus den beiden Brücken 1, 2 nicht bewegt, bzw. verändert sich das den MR-Sensor umgebende Magnetfeld nicht, so verändern sich auch die beiden Spannungen $U_1$, $U_2$ nicht.

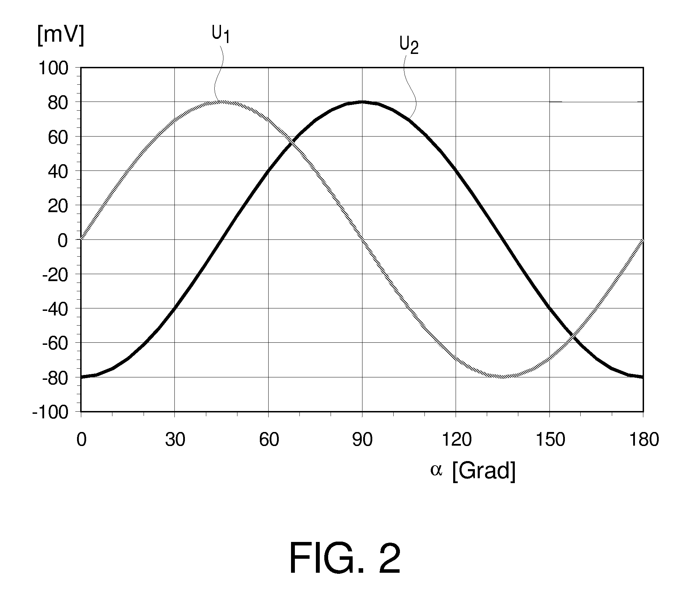

Die 45°-Anordnung sorgt dafür, dass die Ausgangsspannungen $U_1$,$U_2$ der beiden Brücken 1, 2 wie in Figur 2 jeweils um 45° phasenverschoben sind Trägt man die beiden Spannungen $U_1$,$U_2$ über einen (mechanischen) Drehwinkelbereich von 180° auf, so erkennt man in Figur 2, dass jeder Winkel zwischen 0° und 180° eindeutig durch ein Spannungswertepaar $U_1$,$U_2$ gekennzeichnet ist. D.h. die Brückenschaltung kann eine Drehbewegung des MR-Sensors im Bereich von 0° bis 180° eindeutig darstellen. Da die maximalen Amplituden der Spannungen $U_1$,$U_2$ jeweils gleich groß sind, kann man den Winkelbereich von 0° bis 180° auf einen Kreis mit dem Mittelpunkt im Ursprung in einer Ebene projizieren, womit einer mechanischen Drehung des Sensors um 180° eine elektrische Drehung um 360° entspricht.

Durch äußere Einflüsse bzw. Bauteiltoleranzen kommt es jedoch häufig vor, dass den Spannungswertepaare $U_1$,$U_2$ eine sogenannte Offset-Spannung $\underline{U}_{off}$ überlagert ist. Diese Offset-Spannung $\underline{U}_{off}$ sorgt dafür, dass der Kreismittelpunkt sich vom Ursprung entfernt. Um einen Winkel korrekt erfassen zu können, muss diese Offset-Spannung $\underline{U}_{off}$ bekannt sein. Dazu werden die Spannungswertepaare $U_1$,$U_2$ von mehreren Winkelmesspunkten erfasst und dann der Mittelpunkt eines Kreises berechnet, auf dessen Umfang diese Winkelmesspunkte liegen. Die Entfernung vom Kreismittelpunkt zum Ursprung ergibt dann die Offset-Spannung $\underline{U}_{off}$. Diese wird dann von der Auswerteschaltung von dem Spannungswertepaar bzw. ihren entsprechenden als Binärzahlen gespeicherten Messwerten abgezogen, so dass der unverfälschte Winkel von der Auswerteschaltung als Ausgangssignal ausgegeben werden kann.

Die folgenden Abschnitte beschreiben zwei Verfahren, den Mittelpunkt und den Radius eines Kreises zu ermitteln. Dabei seien $x$ und $y$ die Messwerte der Ausgangsspannungen $U_1$,$U_2$ eines Messpunkts des MR-Sensors (Magnetoresistiver Sensor), welche alle auf einem Kreis mit unbekanntem Mittelpunkt ($X_m$ und $y_m$) und einem Radius $r$ liegen.

Die Berechnung mit genau drei Messpunkten erfolgt nach folgender Methode. Diese Methode kann schon sehr hilfreich für ein "Offline"- Trimmen des Sensors sein, d.h. eine Justierung der Spannungswertepaare $U_1$,$U_2$ vor der ersten Winkelberechung, welche auch an ein Ausgabegerät weitergegeben wird.

Gegeben sei die allgemeine Gleichung für einen Kreis

$$(x - x_m)^2 + (y - y_m)^2 = r^2. \qquad (1)$$

Durch Ausmultiplizieren der Klammern ergibt sich

$$x^2 - 2x_m x + x_m^2 + y^2 - 2y_m y + y_m^2 = r^2. \qquad (2)$$

Diese Gleichung lässt sich umstellen zu

$$2x_m x + 2y_m y + r^2 - x_m^2 - y_m^2 = x^2 + y^2 \qquad (3)$$

Es wird eingeführt:

$$a = 2x_m \qquad (\text{und damit } x_m = \frac{a}{2}) \qquad (4)$$

$$b = 2y_m \qquad (\text{und damit } y_m = \frac{b}{2}) \qquad (5)$$

$$c = r^2 - x_m^2 - y_m^2 \qquad (\text{und damit } r = \sqrt{c + x_m^2 + y_m^2}) \qquad (6)$$

$$q = x^2 + y^2 \qquad (\text{und damit } q_i = x_i^2 + y_i^2) \qquad (7)$$

Damit wird die Gleichung (3) zu

$$ax + by + c = q \qquad (8)$$

Sind die drei Punkte $P_1 = (x_1, y_1)$, $P_2 = (x_2, y_2)$, $P_3 = (x_3, y_3)$ bekannt, dann ergibt sich folgendes Gleichungssystem:

$$(9)$$

$$
\begin{aligned}
ax_1 + by_1 + c &= q_1 \\
ax_2 + by_2 + c &= q_2 \\
ax_3 + by_3 + c &= q_3
\end{aligned}
$$

Als Matrizengleichung ergibt sich:

$$(10)$$

$$
\begin{vmatrix} x_1 & y_1 & 1 \\ x_2 & y_2 & 1 \\ x_3 & y_3 & 1 \end{vmatrix}
\bullet
\begin{vmatrix} a \\ b \\ c \end{vmatrix}
=
\begin{vmatrix} q_1 \\ q_2 \\ q_3 \end{vmatrix}
$$

Diese Gleichung ist nach a,b,c zu lösen:

$$(11)$$

$$
\begin{vmatrix} a \\ b \\ c \end{vmatrix}
= \text{Inv}
\begin{vmatrix} x_1 & y_1 & 1 \\ x_2 & y_2 & 1 \\ x_3 & y_3 & 1 \end{vmatrix}
\bullet
\begin{vmatrix} q_1 \\ q_2 \\ q_3 \end{vmatrix}
$$

Nach den Gleichungen (4),(5),(6) sind $x_m$, $y_m$ und $r$ leicht zu errechnen.
Für einen Fit (Kreisberechnung) mit mehr als drei Messpunkten muss eine andere Methode gewählt werden. Ein solches Verfahren wird nachfolgend beschrieben und als Fitalgorithmus bezeichnet. Dieser Fitalgorithmus läuft als Programm auf einem Mikroprozessor in der Auswerteschaltung des Winkelsensors.
Sind nun mehr als drei Punkte bekannt, ist das Gleichungssystem überbestimmt. Es ergibt sich für n Punkte das System in Matrixschreibweise:

$$(12)$$

$$
\begin{vmatrix} 1 & x_1 & y_1 \\ 1 & x_2 & y_2 \\ 1 & x_3 & y_3 \\ \vdots & \vdots & \vdots \\ 1 & x_n & y_n \end{vmatrix}
\bullet
\begin{vmatrix} c \\ a \\ b \end{vmatrix}
=
\begin{vmatrix} q_1 \\ q_2 \\ q \\ \vdots \\ q_n \end{vmatrix}
$$

Zur Lösung des Problems nach der Methode des kleinsten Fehlerquadrats wird nun ein allgemein bekannter Lösungsweg auf das aktuelle Problem angewendet. Dazu werde eine Matrix A definiert:

(13)

$$A = \begin{vmatrix} 1 & x_1 & y_1 & q_1 \\ 1 & x_2 & y_2 & q_2 \\ 1 & x_3 & y_3 & q_3 \\ \vdots & \vdots & \vdots & \vdots \\ 1 & x_n & y_n & q_n \end{vmatrix}$$

Von dieser Matrix wird nun das "Matrixquadrat" $A^2$ berechnet:

$$A^2 = A^\mathsf{T} \cdot A \qquad (14)$$

Damit ergibt sich für $A^2$:

(15)

$$A^2 = \begin{vmatrix} n & \sum^n x & \sum^n y & \sum^n q \\ \sum^n x & \sum^n x^2 & \sum^n xy & \sum^n qx \\ \sum^n y & \sum^n xy & \sum^n y^2 & \sum^n qy \end{vmatrix}$$

Um ein Gleichungssystem zur Lösung zu erhalten, wird die Matrix auf folgende Weise aufgespalten:

(16)

$$\begin{vmatrix} n & \sum^n x & \sum^n y \\ \sum^n x & \sum^n x^2 & \sum^n xy \\ \sum^n y & \sum^n xy & \sum^n y^2 \end{vmatrix} \bullet \begin{vmatrix} c \\ a \\ b \end{vmatrix} = \begin{vmatrix} \sum^n q \\ \sum^n qx \\ \sum^n qy \end{vmatrix}$$

Zur Vereinfachung wird das Gleichungssystem durch $n$ geteilt und einige Abkürzungen eingeführt:

(17)

$$\bar{x} = \frac{\sum^n x}{n} \qquad\qquad (\bar{x} = \text{Mittelwert von } x_i)$$

(18)

$$\overline{y} = \frac{\sum\limits^{n} y}{n} \qquad (\overline{y} = \text{Mittelwert von } y_i)$$

(19)

$$\overline{x^2} = \frac{\sum\limits^{n} x^2}{n} \qquad (\overline{x^2} = \text{Mittelwert von } x_i^2)$$

(20)

$$\overline{y^2} = \frac{\sum\limits^{n} y^2}{n} \qquad (\overline{y^2} = \text{Mittelwert von } y_i^2)$$

(21)

$$\overline{xy} = \frac{\sum\limits^{n} xy}{n} \qquad (\overline{xy} = \text{Mittelwert von } x_i y_i)$$

(22)

$$\overline{q} = \frac{\sum\limits^{n} q}{n} \qquad (\overline{q} = \text{Mittelwert von } q_i)$$

(23)

$$\overline{qx} = \frac{\sum\limits^{n} qx}{n} \qquad (\overline{qx} = \text{Mittelwert von } q_i x_i)$$

(24)

$$\overline{qy} = \frac{\sum\limits^{n} qy}{n} \qquad (\overline{qy} = \text{Mittelwert von } q_i y_i)$$

Damit ergibt sich das Gleichungssystem:

(25)

$$\begin{vmatrix} 1 & \overline{x} & \overline{y} \\ \overline{x} & \overline{x^2} & \overline{xy} \\ \overline{y} & \overline{xy} & \overline{y^2} \end{vmatrix} \bullet \begin{vmatrix} c \\ a \\ b \end{vmatrix} = \begin{vmatrix} \overline{q} \\ \overline{qx} \\ \overline{qy} \end{vmatrix}$$

Dieses braucht nur noch nach *a*, *b* und *c* aufgelöst zu werden, um die Lösung des Problems zu erhalten:

$$(26)$$

$$\begin{vmatrix} c \\ a \\ b \end{vmatrix} = \mathrm{Inv} \begin{vmatrix} 1 & \overline{x} & \overline{y} \\ \overline{x} & \overline{x^2} & \overline{xy} \\ \overline{y} & \overline{xy} & \overline{y^2} \end{vmatrix} \bullet \begin{vmatrix} \overline{q} \\ \overline{qx} \\ \overline{qy} \end{vmatrix}$$

Nach den Gleichungen (4),(5),(6) sind $x_m$, $y_m$ und $r$ leicht zu errechnen.

Die Lösung des Gleichungssystems kann auf vielfache bekannte Weise erfolgen, z.B. nach der bekannten Methode von Gauß. Es existieren auch inzwischen Mikrochip-Algorithmen zur Berechnung von inversen Dreier-Matrizen, die insbesondere in der digitalen Bildverarbeitung Verwendung finden. Natürlich kann man auch die Lösung explizit ausrechnen, was im folgenden als ein Lösungsweg aufgezeigt werden soll. Da für die Anwendung im MR-Sensor die Ermittlung des Radius *r* bzw. der Konstante *c* nicht notwendig ist, wird das Gleichungssystem, zunächst nach der Methode von Gauß auf zwei Gleichungen reduziert:

$$(27)$$

$$\begin{vmatrix} \overline{x^2} - \overline{x}^2 & \overline{xy} - \overline{x} \cdot \overline{y} \\ \overline{xy} - \overline{x} \cdot \overline{y} & \overline{y^2} - \overline{y}^2 \end{vmatrix} \bullet \begin{vmatrix} a \\ b \end{vmatrix} = \begin{vmatrix} \overline{qx} - \overline{q} \cdot \overline{x} \\ \overline{qy} - \overline{q} \cdot \overline{y} \end{vmatrix}$$

Es werden Zwischenvariablen eingeführt:

$$d_x = \overline{x^2} - \overline{x}^2 \qquad (28)$$

$$d_y = \overline{y^2} - \overline{y}^2 \qquad (29)$$

$$d_{xy} = \overline{xy} - \overline{x} \cdot \overline{y} \qquad (30)$$

$$d_{qx} = \overline{qx} - \overline{q} \cdot \overline{x} \qquad (31)$$

$$d_{qy} = \overline{qy} - \overline{q} \cdot \overline{y} \qquad (32)$$

so dass sich für das Gleichungssystem ergibt:

$$(33)$$

$$\begin{vmatrix} d_x & d_{xy} \\ d_{xy} & d_y \end{vmatrix} \bullet \begin{vmatrix} a \\ b \end{vmatrix} = \begin{vmatrix} d_{qx} \\ d_{qy} \end{vmatrix}$$

Dieses Gleichungssystem lässt sich nun nach der Cramerschen Regel mit Hilfe der Hauptdeterminante *D* und den Nebendeterminanten $D_1$ und $D_2$ lösen. Es gilt:

$$D = d_x \cdot d_y - d_{xy}^{\ 2} \qquad (34)$$

$$D_1 = d_{qx} \cdot d_y - d_{qy} \cdot d_{xy} \qquad (35)$$

$$D_2 = d_{qy} \cdot d_x - d_{qx} \cdot d_{xy} \qquad (36)$$

mit

$$a = \frac{D_1}{D} \qquad (37)$$

$$b = \frac{D_2}{D} \qquad (38)$$

oder unter Berücksichtigung der Gleichungen (4),(5)

$$x_m = \frac{D_1}{2D} \qquad (39)$$

$$y_m = \frac{D_2}{2D} \qquad (40)$$

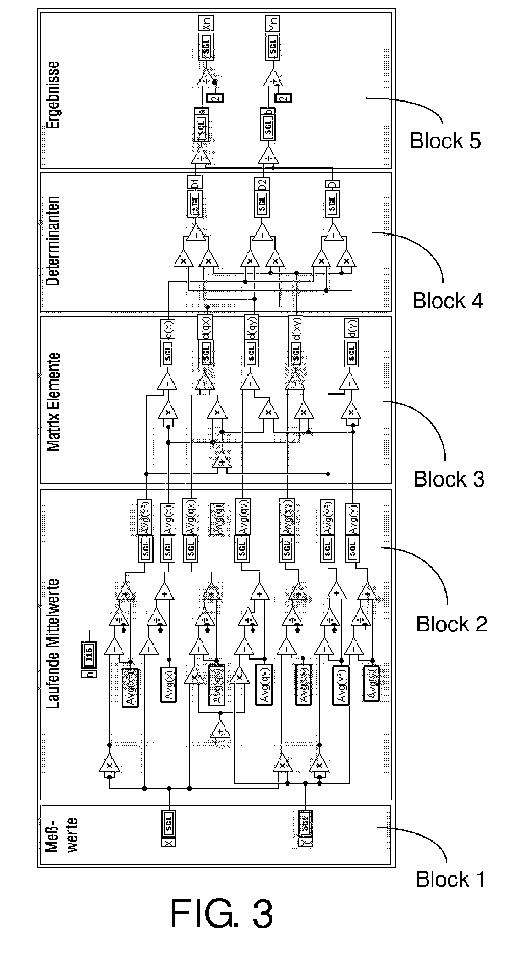

Damit sind die gesuchten Werte des Offsets $\underline{U}_{off}$ bekannt. Figur 3 zeigt die Implementierung des Algorithmus mit einer Datenflussmaschine, als Beispiel hier mit dem Programm LabView. Als wesentlicher Teil werden die laufenden Mittelwerte der Messwerte gebildet sowie die laufenden Mittelwerte der daraus abgeleiteten Größen $x^2$, $y^2$, $x*y$ sowie $x*q$ und $y*q$. Daraufhin erfolgt die Berechnung der Offsetspannungen als Koordinaten des Kreismittelpunktes aus diesen gebildeten laufenden Mittelwerten. Die Umsetzung ist so gewählt, dass nur ganz am Schluss eine Division erfolgt, während alle anderen Operationen Additionen, Subtraktionen und Multiplikationen sind.

Als Eingangsgröße des Fitalgorithmus dienen so bei n-facher Messung die auf der linken Seite in Figur 3 in Block 1 aufgetragenen Messwerte $(x_1,...,x_n)$ für die eine Brücke 1 und $(y_1,...,y_n)$ für die andere Brücke 2, mittels denen ein wie oben in Gleichung (12) erwähnt überbestimmtes System an Kreisgleichungen aufgestellt wird. Im zweiten Block werden nun aus den Messwerten $(x_1,...,x_n)$ und $(y_1,...,y_n)$ die jeweiligen Mittelwerte von x, y, $x^2$, $y^2$, $x*y$,$q*y$,$q*x$ gebildet, welche im dritten Block als Matrixelemente einer neuen Matrix wie in Gleichung (25) verwendet werden. In Block 4 werden die Determinanten der neuen Matrix nach Gleichung (25) berechnet und zwar die Hauptdeterminante D und die beiden Nebendeterminanten $D_1$ und $D_2$ gemäß der Gleichungen (34), (35) und (36). Die Offsetwerte $x_m$ und $y_m$ der Offsetspannung $\underline{U}_{off}$ ergeben sich dann in Block 5 als Ergebnis der Division der Nebendeterminanten $D_1$ und $D_2$ durch die mit 2 multiplizierte Hauptdeterminante D. Die Funktionen gemäß Fig. 3 lassen sich sowohl mittels Hardware als auch mittels Software realisieren.

Hat man unterschiedliche Maximalamplituden der Brückenspannungen U1 und U2 vorliegen, ergibt sich eine Ellipse. Bei bekanntem Amplitudenunterschied kann man mittels Skalieren in einer Richtung die Ellipse auf einen Kreis abbilden, bei unbekanntem Amplitudenunterschied ist ein äquivalentes Verfahren zur Bestimmung des Ellipsenmittelpunktes zu benutzen, ausgehend von der Ellipsengleichung

$$x^2 + \varepsilon^2 \, y^2 = r^2, \qquad\qquad (41)$$

wobei $\varepsilon$ der Asymmetriewert der Ellipse ist (für $\varepsilon$ =1 resultiert die Kreisgleichung).

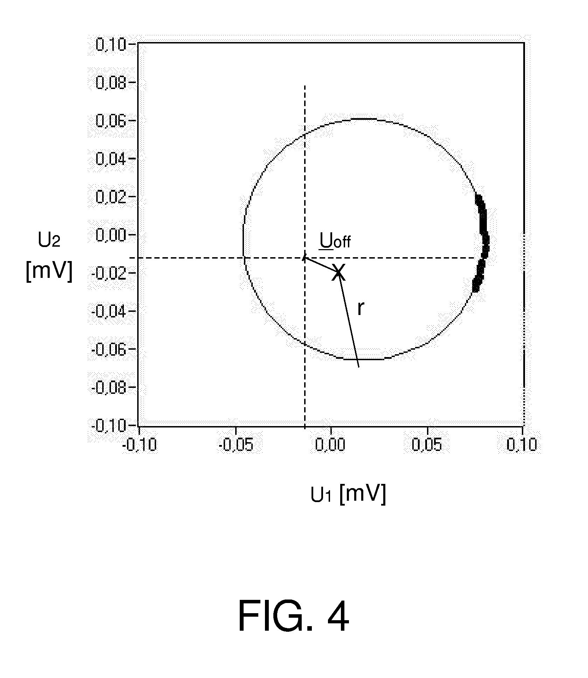

Die mögliche Genauigkeit des genannten Verfahrens zeigt Figur 4. Sie zeigt das Ergebnis eines Kreises, der an die vorgegebenen Messwerte in einem Winkelbereich von 45° angepasst wurde. Es ergibt sich ein gutes Ergebnis.

Das Verfahren hat den einzigartigen Vorteil gegenüber anderen, dass einzelne Messwerte, die "günstig" liegen, sofort die Genauigkeit des Ergebnisses extrem erhöhen. 16 bzw. 256 Messwerte mit unterschiedlichen Rauschamplituden werden im Winkelbereich von 20° erzeugt. Dann wird diesen Messwerten ein einziger, weiterer hinzugefügt, der einen größeren Winkelabstand hat. Es zeigt sich, dass dieser einzige Wert das Ergebnis genau so viel verbessert, als wenn alle Messwerte gleichmäßig in dem neuen, größeren Winkelbereich verteilt wären.

Die Messungen an einem realen MR-Sensor, wie dem MR-Sensor KMZ-41 von Philips, zeigen eine gute Übereinstimmung mit den simulierten Daten. Implementiert wird das Verfahren zweckmäßiger Weise als Software, welche auf einem Mikroprozessor läuft, welcher selbst Teil der Auswerteschaltung des MR-Sensors sein kann.

**Patentansprüche**

1. Winkelsensor,

   - der zwei Brückenschaltungen (1, 2) aufweist, an denen während einer Winkelmessung ein Spannungswertepaar ($U_1$,$U_2$) abfällt, das zusammen mit mindestens einer Korrekturgröße zur Berechnung eines Winkels verwendet wird, und der eine Auswerteschaltung aufweist, die zur Berechnung der Korrekturgröße aus mehreren der Spannungswertepaaren ($U_1$,$U_2$), deren jeweilige Werte gegeneinander aufgetragen auf einem Kreis- oder einem Ellipsenumfang liegen, mittels einer Mittelpunktsberechnung des Kreises oder der Ellipse ausgestaltet ist.

2. Winkelsensor nach Anspruch 1,
   **dadurch gekennzeichnet,**
   **dass** eine Justierung durch die Korrekturgröße während des laufenden Messbetriebs des Winkelsensors erfolgt.

3. Winkelsensor nach Anspruch 1,
   **dadurch gekennzeichnet,**
   **dass** die Brückenschaltungen (1, 2) magnetoresistive Bauteile ($R_{11}$, $R_{12}$, $R_{13}$, $R_{14}$, $R_{21}$, $R_{22}$, $R_{23}$, $R_{24}$) aufweisen und die Brückenschaltungen (1, 2) um einen Winkel von 45° gegeneinander verdreht angeordnet sind.

4. Winkelsensor nach Anspruch 1,
   **dadurch gekennzeichnet,**
   **dass** die Auswerteschaltung des Winkelsensors einen Mikroprozessor zur Berechnung der Koordinaten des Mittelpunkts des Kreises oder der Ellipse als Korrekturgrößen und zur Berechnung des Winkels mittels der Korrekturgrößen aufweist.

5. Winkelsensor nach Anspruch 1,
   **dadurch gekennzeichnet,**
   **dass** die zur Berechnung der Korrekturgröße benötigten Spannungswertepaare ($U_1$, $U_2$) in einem mechanischen Winkelbereich von 10° liegen.

6. Winkelsensor nach Anspruch 3
   **dadurch gekennzeichnet,**
   **dass** der Mikroprozessor 16 bit Fließkommazahlen verarbeitet.

7. Verfahren zur Justierung eines Winkelsensors, beinhaltend die Schritte

   - Messung eines Spannungswertepaares ($U_1$, $U_2$) an zwei Brückenschaltungen (1, 2),
   - Berechnung eines Winkels mittels des Spannungswertepaares ($U_1$, $U_2$) und mindestens einer Korrekturgröße,

   Berechnung der Korrekturgröße aus mehreren der Spannungswertepaare ($U_1$,$U_2$), deren jeweilige Werte gegeneinander aufgetragen auf einem Kreis- oder einem Ellipsenumfang liegen, mittels einer Mittelpunktsberechnung des Kreises oder der Ellipse.

FIG. 1

FIG. 2

FIG. 3

# FIG. 4